# EUROPEAN PATENT APPLICATION

(11) **EP 4 319 123 A1**
(43) Date of publication of application: **07.02.2024**
(21) Application number: 22877840.3
(22) Date of filing: 07.09.2022
(51) Int. Cl.: H04N 5/00

(54) **IMAGE PROCESSING METHOD, APPARATUS AND DEVICE, STORAGE MEDIUM, AND COMPUTER PROGRAM PRODUCT**

(30) Priority: 09.10.2021 CN 202111177045
(71) Applicant: Tencent Technology (Shenzhen) Company Limited, Shenzhen, Guangdong, 518057 (CN)
(72) Inventor: ZHAO, Pan, Shenzhen, Guangdong 518057 (CN)
(74) Representative: EP&C
(86) International application number: PCT/CN2022/117416
(87) International publication number: WO 2023/056820

(57) **Abstract**

Disclosed in embodiments of the present application are an image processing method, apparatus and device, a storage medium, and a computer product, and the embodiments of the present application can be applied to various application scenarios such as cloud technology, artificial intelligence, intelligent transportation and driving assistance. The method comprises: acquiring a preview image and a selected filter identifier; if a filter type indicated by the filter identifier is a combined filter, obtaining configuration information of a target special effect filter chain corresponding to the filter identifier, the target special effect filter chain comprising N filter elements, the N filter elements being connected according to a connection mode of a directed acyclic graph, the configuration information of the target special effect filter chain comprising combination information of M filter elements in the N filter elements, and the combination information being determined on the basis of the connection mode of the directed acyclic graph; and combining the M filter elements according to the combination information of the M filter elements to obtain the combined filter, and displaying the combined filter on the preview image.

## Description

### RELATED APPLICATION

This application claims priority to Chinese Patent Application No. 202111177045.2, entitled "IMAGE PROCESSING METHOD, APPARATUS, AND DEVICE, STORAGE MEDIUM, AND COMPUTER PROGRAM PRODUCT", filed with the National Intellectual Property Administration on October 9, 2021, which is incorporated herein by reference in its entirety.

### FIELD OF THE TECHNOLOGY

The present disclosure relates to the field of computer technologies, and in particular, to an image processing method, apparatus, and device, a storage medium, and a computer program product.

### BACKGROUND OF THE DISCLOSURE

Filters are mainly used for achieving various special effects on images. With the rapid development of the information age, various filter functions are developed on increasingly more camera applications such as short video applications and various special effect cameras to attract more attention from users. For example, some funny filters and television and movie character imitation makeup filters are developed.

Currently, a version of an application is usually updated by updating code of a camera application, and the new version of application has some new filters. After the version of the application is updated, the new version of the application needs to be submitted to each application store for manual or automatic update by users, so that the users can experience the different filters.

### SUMMARY

Embodiments of the present disclosure provide an image processing method, including:
obtaining an input image and a filter identifier for an image filter;
obtaining configuration information for a target effect filter chain corresponding to the filter identifier when the filter identifier indicates a combined filter, the target effect filter chain including N filter elements connected in a connection manner of a directed acyclic graph, and each of the N filter elements being a single filter or a sub-filter chain; and the configuration information of the target effect filter chain including combination information of M filter elements, the combination information being determined based on the connection manner of the directed acyclic graph, wherein both N and M are integers greater than or equal to 1, and M is less than or equal to N; and
obtaining the combined filter by combining the M filter elements according to the combination information of the M filter elements to obtain a combined filter, and displaying the combined filter on the input image.

Embodiments of the present disclosure provide an image processing apparatus, including:
an obtaining unit, configured to obtain a input image and a filter identifier for an image filter,
the obtaining unit being further configured to obtain configuration information for a target effect filter chain corresponding to the filter identifier when a filter type indicates a combined filter, the target effect filter chain including N filter elements connected in a connection manner of a directed acyclic graph, and each of the N filter elements being a single filter or a sub-filter chain; and the configuration information of the target effect filter chain including combination information of M filter elements, the combination information being determined based on the connection manner of the directed acyclic graph, wherein both N and M are integers greater than or equal to 1, and M is less than or equal to N;
a processing unit, configured to obtain the combined filter by combining the M filter elements according to the combination information of the M filter elements to obtain a combined filter; and
a display unit, configured to display the combined filter on the input image.

Embodiments of the present disclosure provide an image processing device, including: a processor, suitable for implementing one or more computer programs; and a computer storage medium, storing one or more computer programs, the one or more computer programs being suitable for loading by the processor and performing the following steps:
obtaining an input image and a filter identifier for an image filter; obtaining configuration information for a target effect filter chain corresponding to the filter identifier when the filter identifier indicates a combined filter, the target effect filter chain comprising N filter elements connected in a connection manner of a directed acyclic graph, and each of the N filter elements being a single filter or a sub-filter chain; and the configuration information of the target effect filter chain comprising combination information of M filter elements, the combination information being determined based on the connection manner of the directed acyclic graph, wherein both N and M are integers greater than or equal to 1, and M is less than or equal to N; and obtaining the combined filter by combining the M filter elements according to the combination information of the M filter elements to obtain a combined filter, and displaying the combined filter on the input image.

Embodiments of the present disclosure provide a computer storage medium, storing a computer program, the computer program, when executed by a processor, being used for performing the following steps:
obtaining an input image and a filter identifier for an image filter; obtaining configuration information for a target effect filter chain corresponding to the filter identifier when the filter identifier indicates a combined filter, the target effect filter chain comprising N filter elements connected in a connection manner of a directed acyclic graph, and each of the N filter elements being a single filter or a sub-filter chain; and the configuration information of the target effect filter chain comprising combination information of M filter elements, the combination information being determined based on the connection manner of the directed acyclic graph, wherein both N and M are integers greater than or equal to 1, and M is less than or equal to N; and obtaining the combined filter by combining the M filter elements according to the combination information of the M filter elements to obtain a combined filter, and displaying the combined filter on the input image.

Embodiments of the present disclosure provide a computer program product or a computer program, the computer program product including a computer program, and the computer program being stored in a computer storage medium. A processor of an image processing device reads the computer program from the computer storage medium, and the processor executes the computer program, so that the image processing device performs the following steps:
obtaining an input image and a filter identifier for an image filter; obtaining configuration information for a target effect filter chain corresponding to the filter identifier when the filter identifier indicates a combined filter, the target effect filter chain comprising N filter elements connected in a connection manner of a directed acyclic graph, and each of the N filter elements being a single filter or a sub-filter chain; and the configuration information of the target effect filter chain comprising combination information of M filter elements, the combination information being determined based on the connection manner of the directed acyclic graph, wherein both N and M are integers greater than or equal to 1, and M is less than or equal to N; and obtaining the combined filter by combining the M filter elements according to the combination information of the M filter elements to obtain a combined filter, and displaying the combined filter on the input image.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show some embodiments of the present disclosure, and a person of ordinary skill in the art may still derive other drawings from these accompanying drawings without creative efforts.
FIG. 1 is a schematic structural diagram of an image processing system according to an embodiment of the present disclosure.
FIG. 2 is a schematic flowchart of an image processing method according to an embodiment of the present disclosure.
FIG. 3a is a schematic diagram of a user interface of a camera application according to an embodiment of the present disclosure.
FIG. 3b is a schematic diagram of entering a shooting screen according to an embodiment of the present disclosure.
FIG. 3c is a schematic diagram of selecting a filter identifier according to an embodiment of the present disclosure.
FIG. 3d is another schematic diagram of selecting a filter identifier according to an embodiment of the present disclosure.
FIG. 4a is a schematic diagram of a target effect filter chain according to an embodiment of the present disclosure.
FIG. 4b is a schematic diagram of another target effect filter chain according to an embodiment of the present disclosure.
FIG. 4c is a schematic diagram of still another target effect filter chain according to an embodiment of the present disclosure.
FIG. 4d is a schematic diagram of yet another target effect filter chain according to an embodiment of the present disclosure.
FIG. 5 is a schematic diagram of displaying a combined filter on a preview image according to an embodiment of the present disclosure.
FIG. 6 is a schematic flowchart of another image processing method according to an embodiment of the present disclosure.
FIG. 7 is a schematic flowchart of still another image processing method according to an embodiment of the present disclosure.
FIG. 8 is a schematic structural diagram of an image processing apparatus according to an embodiment of the present disclosure.
FIG. 9 is a schematic structural diagram of an image processing device according to an embodiment of the present disclosure.

### DESCRIPTION OF EMBODIMENTS

Technical solutions in the embodiments of the present disclosure are clearly and completely described below with reference to the accompanying drawings in the embodiments of the present disclosure.

In the related technology, a filter has an undiversified effect, and a user loses interest after using the filter for a long time. This reduces a degree of attention from the user to this type of application. Addition of a new filter by updating a version of a camera application by updating code of the application causes inconvenience in application development, and a user can experience the new filter only after performing update, which also causes inconvenience in user experience.

Embodiments of the present disclosure provide an image processing solution that allows convenient implementation of rich filters. During specific implementation, in a case that a filter type indicated by a filter identifier selected by a user is a combined filter, configuration information of a target effect filter chain corresponding to the filter identifier can be obtained. The configuration information includes combination information of M filter elements in the target effect filter chain. The combination information of the M filter elements can be determined based on a connection manner of a directed acyclic graph of N filter elements. Further, the M filter elements can be combined according to the combination information in the configuration information to obtain a combined filter, and the obtained combined filter can be displayed on a preview image. It is to be understood that, the combination information determined based on the connection manner of the directed acyclic graph may be diverse, and various combined filters can be obtained by combining the M filter elements based on the combination information. Compared with the related technology in which only a single filter can be displayed on the preview image, this embodiment of the present disclosure enriches filter types. In addition, the combination information of the M filter elements in the present disclosure may be user-defined, for implementing some user-defined filter effects, to achieve filter effects currently not available in an application. Moreover, in this embodiment of the present disclosure, the user can enjoy rich filters without the need to update the application, facilitating user experience and operations. This embodiment of the present disclosure can be applied to various application scenarios, including but not limited to, a cloud technology, artificial intelligence, smart transportation, and assisted driving.

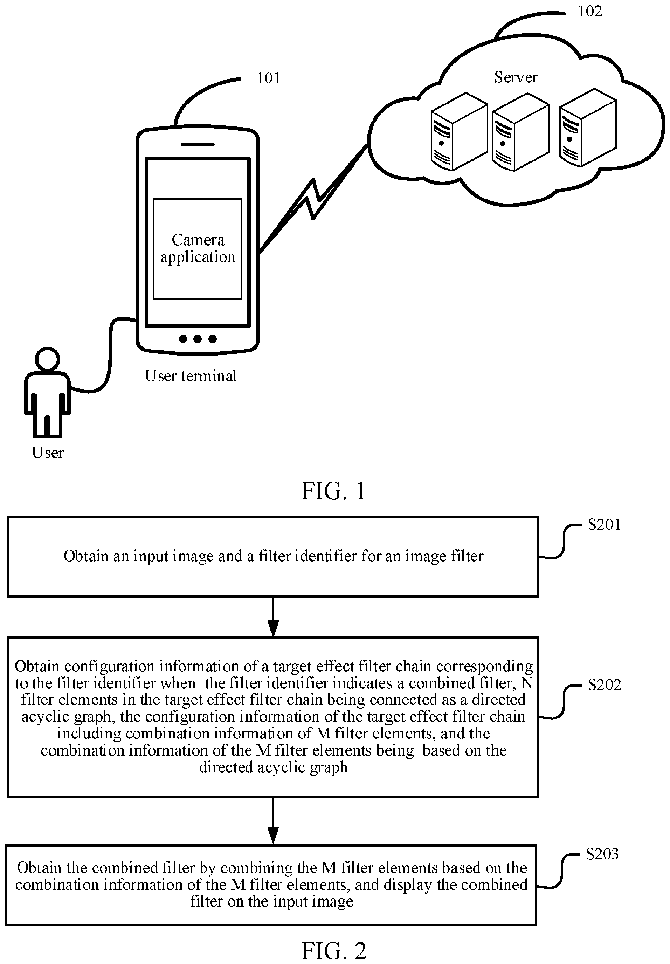

Based on the image processing solution mentioned herein, an embodiment of the present disclosure provides an image processing system. FIG. 1 is a schematic structural diagram of an image processing system according to an embodiment of the present disclosure. The image processing system shown in FIG. 1 includes a user terminal 101 and a server 102. The user terminal 101 and the server 102 may be connected in a wired or wireless manner. The user terminal 101 may be a smartphone, a tablet computer, a notebook computer, a desktop computer, a smart speaker, a smartwatch, an in-vehicle terminal, a smart home appliance, an intelligent voice interaction device, or the like, but is not limited thereto. The server 102 may be an independent physical server, or may be a server cluster or distributed system including a plurality of physical servers, or may be a cloud server providing cloud computing services.

Camera applications such as various short video applications or various camera applications can be run in the user terminal 101. The server 102 can provide support for the camera application. A rendering engine can be integrated in the camera application. In all embodiments of the present disclosure, the rendering engine integrated in the camera application may be a cross-platform rendering engine. The cross-platform rendering engine means that the rendering engine can call different rendering logic or rendering interfaces for rendering according to different platforms or systems used. For example, for a user terminal of an Android system, during use of the cross-platform rendering engine for rendering, rendering logic corresponding to the Android system in the rendering engine can be called for rendering; and for a user terminal of an iOS system, rendering logic corresponding to the iOS system in the rendering engine can be called for rendering. Use of the cross-platform rendering engine for filter rendering is irrelevant to an graphics application and a running platform, and a rendering library of a personalized engine framework style can be created, so that one set of code can be used in different user terminals at the same time, thereby allowing one filter to be experienced by users using the different user terminals.

The camera application can support various types of filters, and each type of filter corresponds to one filter identifier. A plurality of filter identifiers can be displayed in the camera application, so that a user can add a filter to a preview image by selecting a filter identifier. In all embodiments of the present disclosure, filter types of the various types of filters may include a single filter and a combined filter. The single filter can be implemented by rendering a single filter. The combined filter can be obtained by combining a plurality of filters in a special effect filter chain.

During specific implementation, the user starts the camera application in the user terminal 101 and selects a filter identifier in the camera application. The user terminal 101 obtains the filter identifier selected by the user and obtains a preview image in the camera application. Further, in a case of determining that a filter type indicated by the filter identifier is a combined filter, the user terminal 101 obtains configuration information of a target effect filter chain corresponding to the filter identifier from the server 102. The target effect filter chain includes N filter elements. Each filter element may be a single filter or a special effect filter chain. The N filter elements in the target effect filter chain can be connected in a connection manner of a directed acyclic graph. The configuration information of the target effect filter chain may include combination information of M filter elements. The combination information can be determined based on the connection manner of the directed acyclic graph. Finally, the user terminal 101 combines the M filter elements according to the combination information of the M filter elements to obtain a combined filter, and displays the combined filter on the preview image.

In the image processing procedures as disclosed herein, compared with the related technology in which only a single filter can be displayed on the preview image, this embodiment of the present disclosure enriches filter types. Moreover, in all embodiments of the present disclosure, the user can enjoy rich filters without the need to update the application, facilitating user experience and operations.

Based on the image processing system mentioned herein, an embodiment of the present disclosure provides an image processing method. FIG. 2 is a schematic flowchart of an image processing method according to an embodiment of the present disclosure. The image processing method shown in FIG. 2 may be performed by an image processing device, and specifically, may be performed by a processor of the image processing device. The image processing device may be the user terminal 101 in the image processing system shown in FIG. 1. The image processing method shown in FIG. 2 may include the following operations:

Operation S201. Obtain an input image and a selected filter identifier for an image filter indicating an image filter type of the image filter.

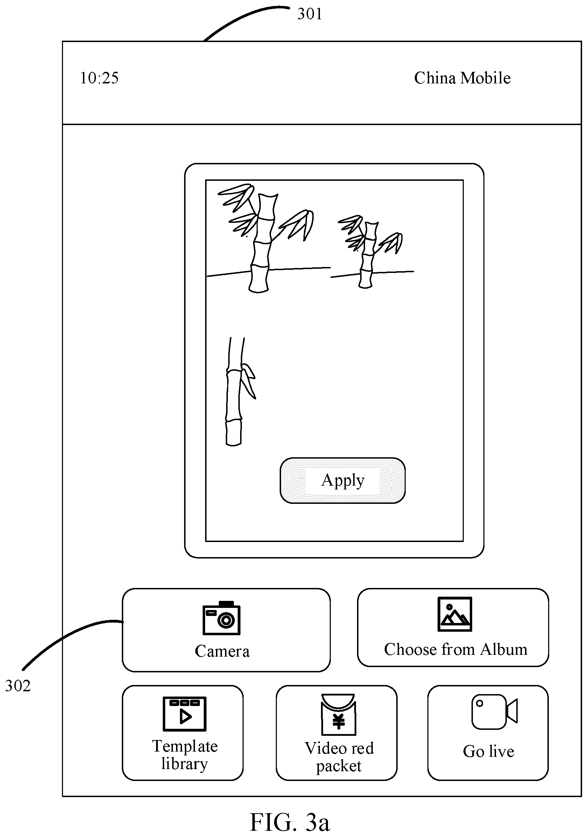

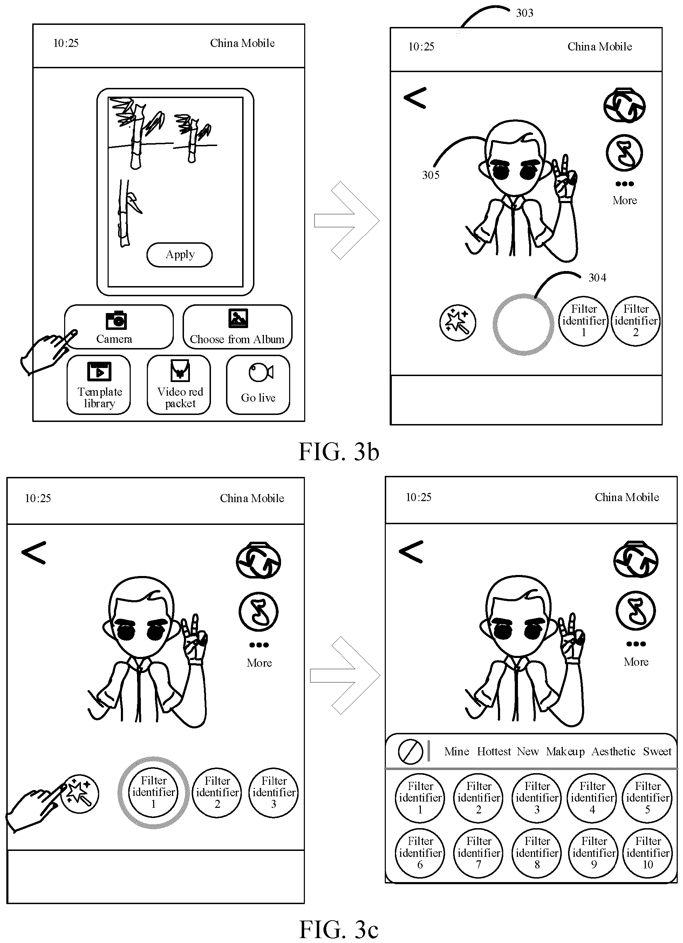

In all embodiments of the present disclosure including the embodiments of both the claims and the specification (hereinafter referred to as "all embodiments of the present disclosure"),the input image can also be referred to as a preview image which may be any frame of image in a clip of video. The video may be in any video shot by a user at a historical time. Alternatively, as described above, assuming that a short video application is running in the image processing device, the video may alternatively be obtained by calling the short video application for real-time shooting. For example, FIG. 3a is a schematic diagram of a user interface of a camera application according to an embodiment of the present disclosure. Assuming that the camera application is a short video application, a user opens the short video application in the image processing device, and the image processing device displays a user interface of the short video application, as shown by 301 in FIG. 3a. The user interface 301 includes a shooting option 302. The user selects the shooting option 302 and triggers display of a shooting screen, as shown by 303 in FIG. 3b. The shooting screen 303 includes a start shooting option 304. A clip of video can be shot by triggering the shooting option 304. The preview image may be any frame of image in this clip of video. For example, in a case that 305 is a frame of image in the video obtained by shooting, 305 may be used as a preview image.

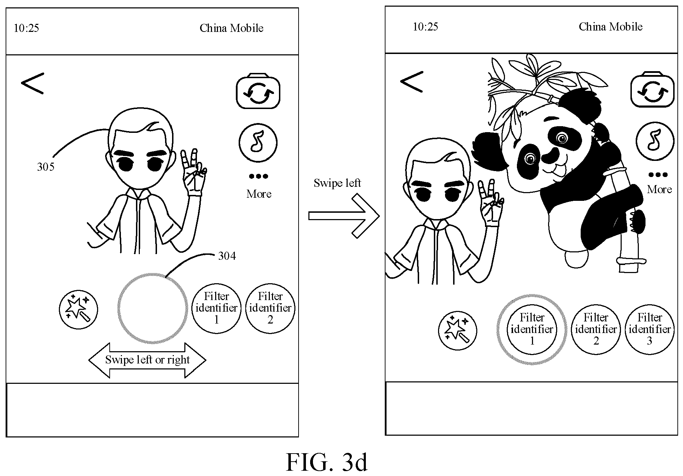

In all embodiments of the present disclosure, the filter identifier may be selected by the user in the shooting screen 303. For example, in a case that the shooting screen 303 includes a trigger option that displays all filters, identified as "All magic". After the trigger option is clicked/tapped, a plurality of filter identifiers may be displayed according to filter effects, such as a filter identifier 1 to a filter identifier 10 shown in FIG. 3c. The filter effects may include Hottest, New, Makeup, Aesthetic, Sweet, and the like. A filter identifier triggered by the user among the filter identifiers can be determined as the selected filter identifier. For another example, the shooting screen 303 may display filter identifiers of a plurality of hot filters, such as a filter identifier 1 and a filter identifier 2 displayed behind the shooting option 304. The user can swipe each filter identifier, and when a filter identifier is swiped into the start shooting option 304, the filter identifier can be determined as the selected filter identifier. For example, in a case that the user swipes the filter identifier 1 into the start shooting option 304, as shown in FIG. 3d, the filter identifier 1 can be determined as the selected filter identifier.

Operation S202. Obtain configuration information for a target effect filter chain corresponding to the filter identifier when the filter identifier indicates a combined filter, the configuration information of the target effect filter chain including combination information of M filter elements.

In all embodiments of the present disclosure, the target effect filter chain can be a chain-arrangement of image filters, which are chained up such that the output of one image filter is the input of its subsequent image filter. A preset correspondence between a filter, a filter identifier, and a filter type can be obtained, the filter type including either of a single filter and a combined filter. In a case that a filter type corresponding to a filter identifier is a single filter, a filter corresponding to the filter identifier can be a single filter. In a case that a filter type corresponding to a filter identifier is a combined filter, a filter corresponding to the filter identifier can be a special effect filter chain. A filter type corresponding to the selected filter identifier can be searched for based on the correspondence between a filter, a filter identifier, and a filter type. In a case that the filter type corresponding to the selected filter identifier is a combined filter, a target effect filter chain corresponding to the selected filter identifier can be obtained based on the correspondence between a filter, a filter identifier, and a filter type. Configuration information of the target effect filter chain can be obtained.

Specifically, as can be learned from the above, there may be two filter types: single filter and combined filter. The single filter means that a filter provides one filter effect. For example, a filter for adding a sticker to a face can be a single filter, and a filter for adding a specific makeup effect to a face can be also a single filter. The combined filter refers to a filter that combines a plurality of filter elements together to provide one or more filter effects. For example, a giant panda effect and an "add sticker" effect can be combined to obtain a combined filter. For any combined filter, a plurality of filter elements constituting the combined filter form a special effect filter chain. The plurality of filter elements in the special effect filter chain can be connected. Each filter element may be a single filter or a special effect filter chain.

In the present disclosure, a correspondence between a filter, a filter identifier, and a filter type is preset, so that a filter can be found and a filter type of the filter can be determined according to a filter identifier of the filter. In a case that the image processing device determines, according to a filter identifier, that a filter type indicated by the filter identifier is a combined filter, the image processing device obtains configuration information of a target effect filter chain corresponding to the filter identifier. The target effect filter chain can be a sub-filter chain (such as a special effect filter chain) corresponding to the filter identifier among a plurality of special effect filter chains. Assuming that the target effect filter chain includes N filter elements, the N filter elements can be connected in a connection manner of a directed acyclic graph. The target effect filter chain formed by connecting the N filter elements in the connection manner of the directed acyclic graph includes both a chain structure and a graphical structure.

The directed acyclic graph can be a directed graph without loops. If in a directed graph, a particular vertex cannot be returned after startup is performed from the vertex and a plurality of edges can be passed through, the directed graph can be a directed acyclic graph.

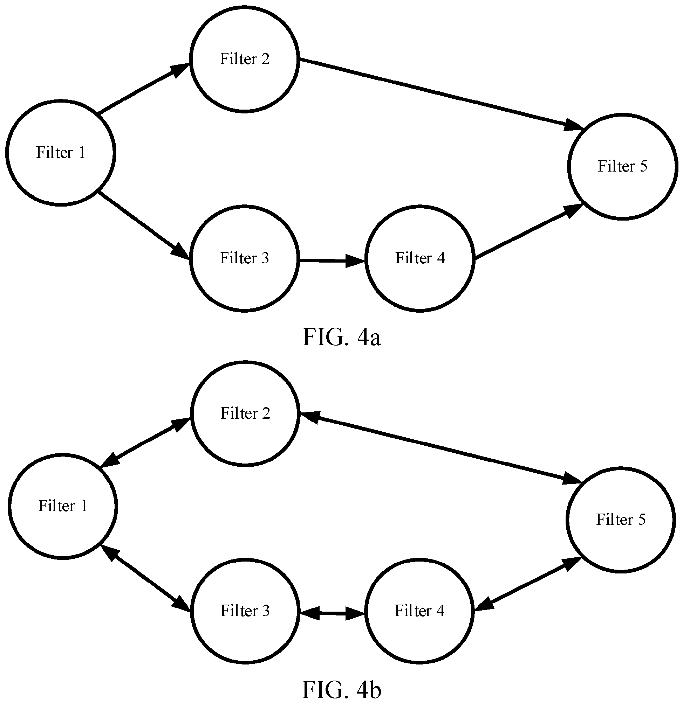

In all embodiments of the present disclosure, each filter element in the N filter elements may be a single filter. For example, FIG. 4a is a schematic diagram of a target effect filter chain according to an embodiment of the present disclosure. In FIG. 4a, assuming that a value of N is 5, five filter elements included in the target effect filter chain are all single filters, respectively denoted as filter 1, filter 2, filter 3, filter 4, and filter 5. In the target effect filter chain, the five filter elements can be connected in the connection manner of the directed acyclic graph. In this directed acyclic graph, filter 1-filter 3-filter 4-filter 5 constitutes a chain structure, and filter 1-filter 2-filter 5 and filter 1-filter 3-filter 4-filter 5 constitute a graphical structure. The connection between the filter elements may be unidirectional or bidirectional. Unidirectional connections are shown in FIG. 4a. For example, filter 1 is connected to filter 2, filter 2 is connected to filter 5, filter 1 is connected to filter 3, filter 3 is connected to filter 4, and filter 4 is connected to filter 5. If the connection between the filter elements is bidirectional, filter 2 can also be connected to filter 1 in reverse, and this is true for other connections, which are not listed herein one by one. For details, refer to FIG. 4b.

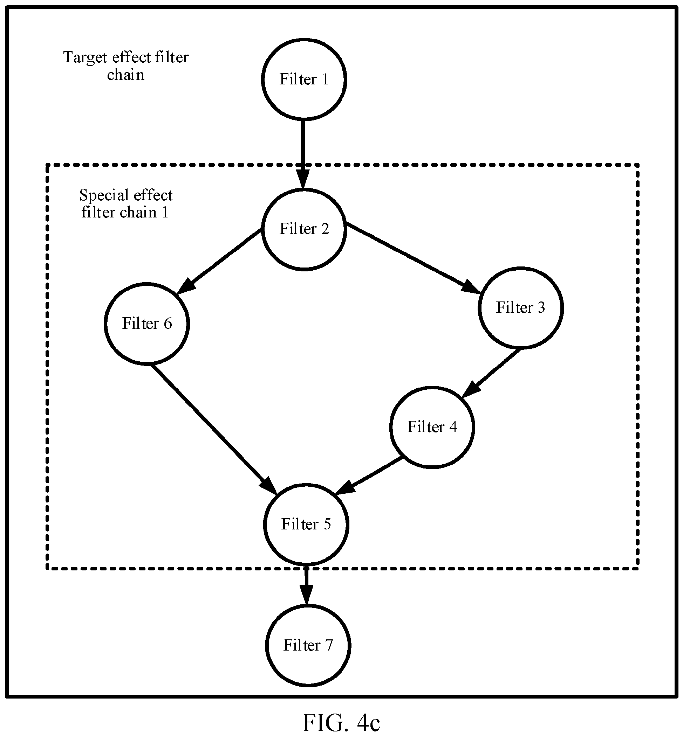

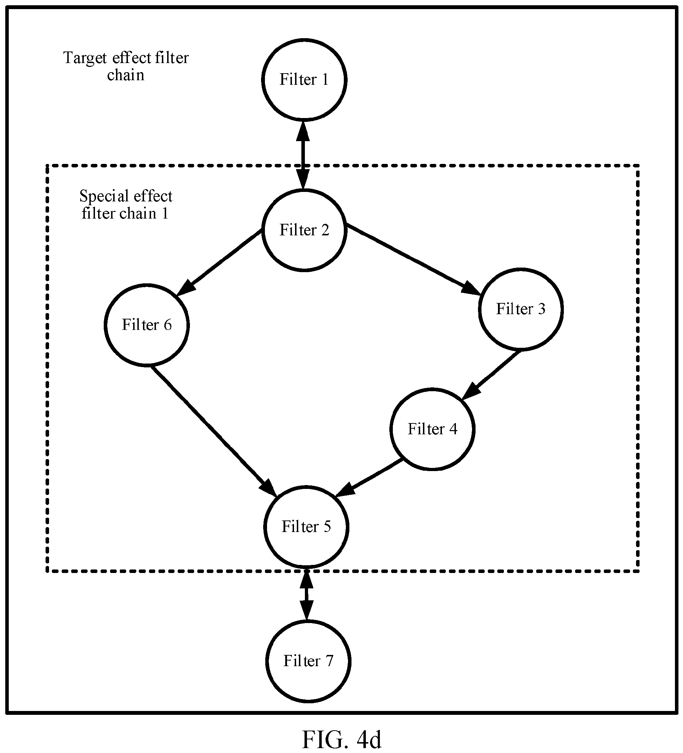

In all embodiments of the present disclosure, each filter element in the N filter elements may alternatively be a special effect filter chain. For example, FIG. 4c is a schematic diagram of another target effect filter chain according to an embodiment of the present disclosure. In FIG. 4c, assuming that a value of N is 3, and the connection between the filter elements can be unidirectional, the three filter elements may include two single filters and one special effect filter chain. The two single filters may be denoted as filter 1 and filter 7, and the special effect filter chain may be denoted as a special effect filter chain 1. The special effect filter chain 1 may include five filter elements. Assuming that the five filter elements are all single filters, respectively denoted as filter 2, filter 3, filter 4, filter 5, and filter 6, the five filter elements in the special effect filter chain 1 can be connected in a connection manner of a directed acyclic graph. Filter 1, filter 7, and the special effect filter chain 1 can be also connected in the connection manner of the directed acyclic graph. FIG. 4d is a schematic diagram of another target effect filter chain according to an embodiment of the present disclosure. Filter elements in the target effect filter chain shown in FIG. 4d are the same as those in FIG. 4c. However, different from FIG. 4c in which the connection between the filter elements can be unidirectional, in FIG. 4d, the connection between the filter elements can beis bidirectional.

The configuration information of the target effect filter chain may include the combination information of the M filter elements in the N filter elements indicating a combination manner between the M filter elements determined based on the connection manner of the directed acyclic graph.. M can be an integer less than or equal to N. In other words, the configuration information of the target effect filter chain specifies which filter elements can be combined and how these filter elements are combined. For example, assuming that the connection between the N filter elements is shown in FIG. 4a, the M filter elements may include filter 1, filter 3, filter 4, and filter 5. The combination manner defined in the combination information of the M filter elements may be filter 1-filter 3-filter 4-filter 5. The M filter elements may be filter 1, filter 2, and filter 5. The combination manner defined in the combination information of the M filter elements may be filter 1-filter 2-filter 5. For another example, assuming that the connection manner of the N filter elements is shown in FIG. 4b, the M filter elements include filter 1, filter 2, and filter 5, and the combination manner defined in the combination information of the M filter elements may be filter 5-filter 2-filter 1. For still another example, the connection manner of the N filter elements is shown in FIG. 4c, and the M filter elements include filter 1, a special effect filter chain 1, and filter element 7. In other words, in this case, M is equal to N. The combination manner defined in the combination information of the M filter elements may be filter 1-special effect filter chain 1-filter 7. Only some of the possible combination manners are listed above. During actual application, more combination manners can be obtained, which are not listed herein one by one. It can be learned that, in the connection manner of the directed acyclic graph in the present disclosure, different filter elements can be combined to obtain various different combined filters, or combined filters obtained by combining the same filter elements in different combination orders may be different. In use of the present disclosure, different combined filters can be obtained, thereby enriching filter effects.

Operation S203. Obtain the combined filter by combining the M filter elements based on the combination information of the M filter elements, and display the combined filter on the input image.

After the combination information of the M filter elements is obtained, a combined filter can be obtained by combining the M filter elements according to the combination manner of the directed acyclic graph indicated in the combination information of the M filter elements to obtain a. Then, the combined filter can be displayed on the preview image. It is to be understood that, there may be one or more pieces of combination information of the M filter elements. In this case, there also may be one or more combined filters obtained, and in the following description in the present disclosure, one combination filter can be used as an example.

During specific implementation, the combining the M filter elements to obtain a combined filter may include: combining the M filter elements through sequential superposition in a combination sequence specified in the combination manner in the combination information to obtain a combined filter. For example, the combination manner specified in the combination information can be filter 1-filter 2-filter 5. In this case, filter 1 can be rendered first. Then, filter 2 can be rendered on the basis of filter 1 to obtain a combined filter. Then, filter 5 can be rendered on the basis of the combined filter to obtain a final combined filter.

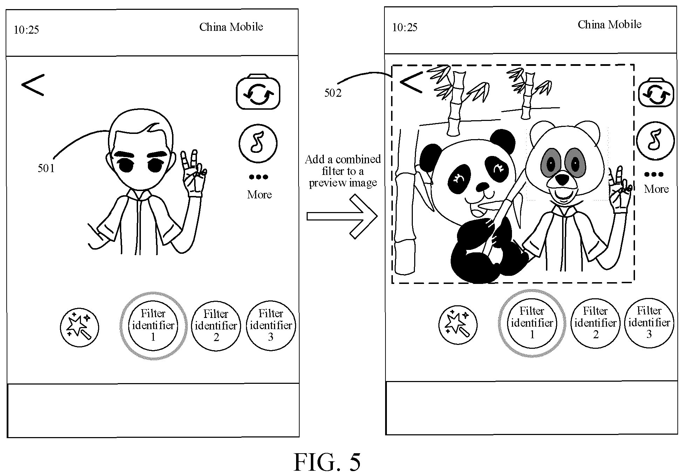

For example, FIG. 5 is a schematic diagram of displaying a combined filter on a preview image according to an embodiment of the present disclosure. Assuming that 501 is the preview image, and the target effect filter chain is shown in FIG. 4b. The combination information of the M filter elements specifies that the M filter elements can be filter 1, filter 2, and filter 5, and the combination manner of the M filter elements can be filter 1-filter 2-filter 5. It is assumed that filter 1 is an effect of a bamboo forest, filter 2 can be an effect of a giant panda eating bamboo, and filter 5 can be an effect of transforming a human face into a cartoon panda head. In this case, the filters can be combined through sequential superposition in accordance with filter 1-filter 2-filter 5 to obtain a combined filter. Finally, the combined filter can be displayed on the preview image. An effect of displaying the combined filter on the preview image may be shown by 502 in the figure.

In all embodiments of the present disclosure, a preview image and a selected filter identifier can be obtained, and configuration information of a target effect filter chain corresponding to the filter identifier can be obtained in a case that a filter type indicated by the filter identifier is a combined filter. The target effect filter chain includes N filter elements. The N filter elements can be connected in a connection manner of a directed acyclic graph. Each filter element may be a single filter or a special effect filter chain. The configuration information of the target effect filter chain may include combination information of M filter elements. The combination information can be determined based on the connection manner of the directed acyclic graph of the N filter elements. Further, the M filter elements can be combined according to the combination information of the M filter elements to obtain a combined filter, and the combined filter is displayed on the preview image. It is to be understood that the combination information of the M filter elements is determined based on the connection manner of the directed acyclic graph, and the connection manner of the directed acyclic graph can generate various combination information, so that the combination can be easier and faster. In all embodiments of the present disclosure, the M filter elements can be combined according to the combination information, so that richer filter effects are obtained without updating applications. In the way of enriching filter effects in the present disclosure, the process is simple and operations are easy, thereby not only improving running efficiency of the image processing device, but also avoiding a waste of device resources caused by incorrect operations.

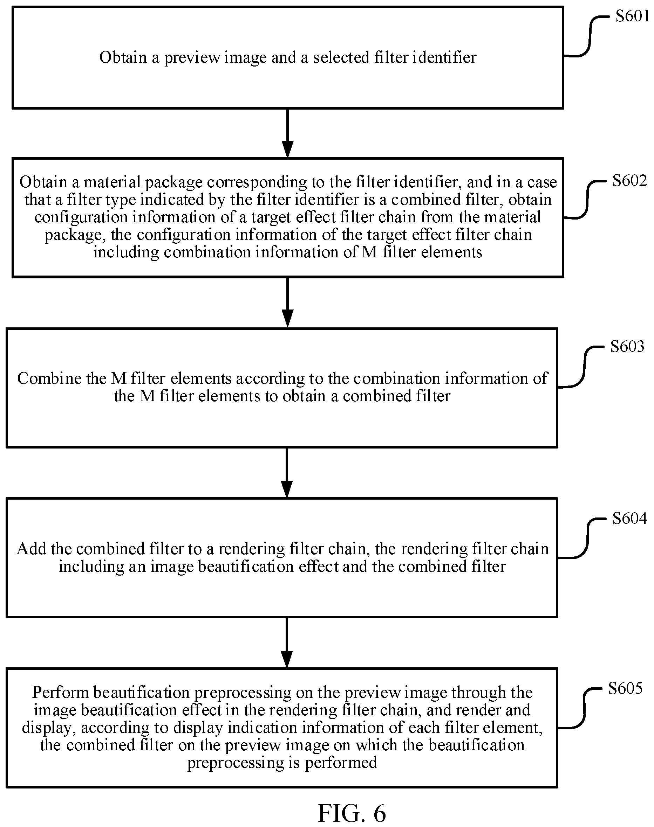

Based on the image processing method disclosed herein, an embodiment of the present disclosure provides another image processing method. FIG. 6 is a schematic flowchart of another image processing method according to an embodiment of the present disclosure. The image processing method shown in FIG. 6 may be performed by an image processing device, and specifically, may be performed by a processor of the image processing device. The image processing device may be the user terminal described above. The image processing method shown in FIG. 6 may include the following operations:
Operation S601. Obtain a preview image and a selected filter identifier.

In all embodiments of the present disclosure, for some feasible implementations included in operation S601, refer to the related description of operation S201 in the embodiment of FIG. 2. Details are not described herein again.

Operation S602. Obtain a material package corresponding to the filter identifier, and in a case that a filter type indicated by the filter identifier is a combined filter, obtain configuration information of a target effect filter chain from the material package, the configuration information of the target effect filter chain including combination information of M filter elements.

The material package may include all filters available in a camera application. All the available filters can be integrated into the material package. These filters include single filters and combined filters. For combined filters, combination information between filter elements in the special effect filter chain may be changed in the material package, so that richer filter effects can be provided. In this way, the filter effects can be enriched without updating the application. In the related technology, a manner of enriching filter effects can be usually to modify code of the camera application, add more filters thereto, and then push the updated camera application to each application store. The user can experience rich filters only after downloading the updated camera application. It can be learned that, compared with the related technology, in the way of enriching filter effects in the present disclosure, the process can be simple and operations can be easy, thereby not only improving running efficiency of the image processing device, but also avoiding a waste of device resources caused by incorrect operations.

The material package may be stored in a server. The image processing device downloads the material package from the server through interaction with the server. The material package includes one or more special effect filter chains constituting combined filters and configuration information in each filter chain. In the present disclosure, the image processing device obtains, from the material package, the configuration information of the target effect filter chain corresponding to the filter identifier.

OperationS603. Combine the M filter elements according to the combination information of the M filter elements to obtain a combined filter.

Before operation S603 is performed, N filter elements need to be created. The configuration information of the target effect filter chain further includes shader information corresponding to each filter element in the N filter elements. Assuming that the N filter elements are all single filters, the operation of creating N filter elements may include: performing initialization based on the shader information corresponding to the each filter element to obtain the N filter elements.

In all embodiments of the present disclosure, a rendering engine used during rendering can be a cross-platform rendering engine. The shader information corresponding to the each filter element includes a cross-platform vertex shader and a cross-platform fragment shader. The configuration information of the target effect filter chain includes a JSON file. The combination information of the M filter elements can be stored in the JSON file. The shader information corresponding to the each filter element can be in a one-to-one correspondence with the each filter element in a JSON manner.

Performing initialization based on shader information of any one of the filter elements may include: calculating, by using the vertex shader, an area in which the any one of the filter elements needs to be applied to the preview image, transferring information about the calculated area to a fragment shader corresponding to the any one of the filter elements, and calculating color information required by the area in the fragment shader.

In all embodiments of the present disclosure, the shader information corresponding to the each filter element can be obtained from the material package according to a shader information storage path of the each filter element. During specific implementation, the shader information corresponding to the each filter element can be downloaded from the material package according to the shader information storage path of the filter element.

OperationS604. Add the combined filter to a rendering filter chain, the rendering filter chain including a basic image effect and the combined filter.

OperationS605. Perform basic preprocessing on the preview image through the basic image effect in the rendering filter chain, and render and display, according to display indication information of each filter element, the combined filter on the preview image on which the basic preprocessing can be performed.

It is to be understood that, the image processing device renders and displays a filter on the preview image according to a render tree. In the render tree, the preview image can be used as an input of the render tree. The preview image and a rendering filter chain can be connected to each other. The rendering filter chain includes a basic image effect and a filter effect. The basic image effect may be, for example, an image beautification effect. The basic image effect can be used for performing basic preprocessing, such as performing basic image beautification, on the preview image. The image beautification may be, for example, performing whitening, smoothing, exposure compensation, or the like on a person in an image. The filter effect can be added to the preview image on which the image beautification is performed. The filter effect can be determined based on the filter identifier selected by the user. In the present disclosure, after the user selects the filter identifier corresponding to the target effect filter chain, the image processing device combines the M filter elements based on the combination information of the M filter elements in the target effect filter chain in the material package to obtain a combined filter, and then updates the rendering filter chain based on the combined filter. During specific implementation, the update may be performed after the combined filter is added to the image beautification effects, so that during rendering, the combined filter can be displayed on the preview image on which the beautification preprocessing is performed.

In all embodiments of the present disclosure, the rendering and displaying the combined filter on the preview image on which the beautification preprocessing is performed may be displaying based on the display indication information of the each filter element in the combined filter. The display indication information of the each filter element can be recorded in the material package of the target effect filter chain. During specific implementation, the material package may include a script file. The script file records the display indication information of the each filter element. Display indication information of any one of the filter elements may be used for specifying how the any one of the filter elements is displayed, and may include a display frequency of a filter element and a corresponding filter effect. For example, display indication information of a filter element specifies that the filter element appears every one second, or that the filter element can be displayed every one second, and in each display, brightness or display color changes, or the like.

To achieve richer filters, in the present disclosure, the display indication information of the each filter element can be set to change with the preview image. For different preview images, display indication information of the same filter element may be different. This is because the different preview images may include different content, have different brightness, and may be of different sizes. Therefore, during specific implementation, in the present disclosure, a script program object may be generated based on the script file. Filter effect reference information corresponding to the preview image can be obtained correspondingly based on the script program object. The filter effect reference information may include any one or more of the following: information indicating whether a target object exists in the preview image, size information of the preview image, and brightness information of the preview image; and then updating the display indication information corresponding to the each filter element based on the filter effect reference information and a preset information update rule. In this way, parameters used for displaying the combined filter in the cross-platform rendering engine can be modified in real time through scripts, and complex filter effects can be achieved, so that the filter effects change with the environment and application scenarios, thereby achieving real-time update of different filter effects.

The preset information update rule may include what display indication information of a filter needs to be in a case that the preview image includes different target objects. For example, the target object can be a human face. In this case, the script program object detects a human face appearing in the preview image and face point information, and updates display indication information of the current preview image according to the detected face point information, so that the rendering engine displays a filter effect of the current preview image based on the display indication information. For example, the face point information can be transferred to a vertex shader and a fragment shader in the rendering engine, so that the rendering engine updates a display location of the filter effect in the preview image. For another example, the preset information update rule may further include what display indication information of a filter needs to be for different sizes of preview images. For still another example, the preset information update rule may further include what display indication information of a filter needs to be when the preview image is located at different brightness levels.

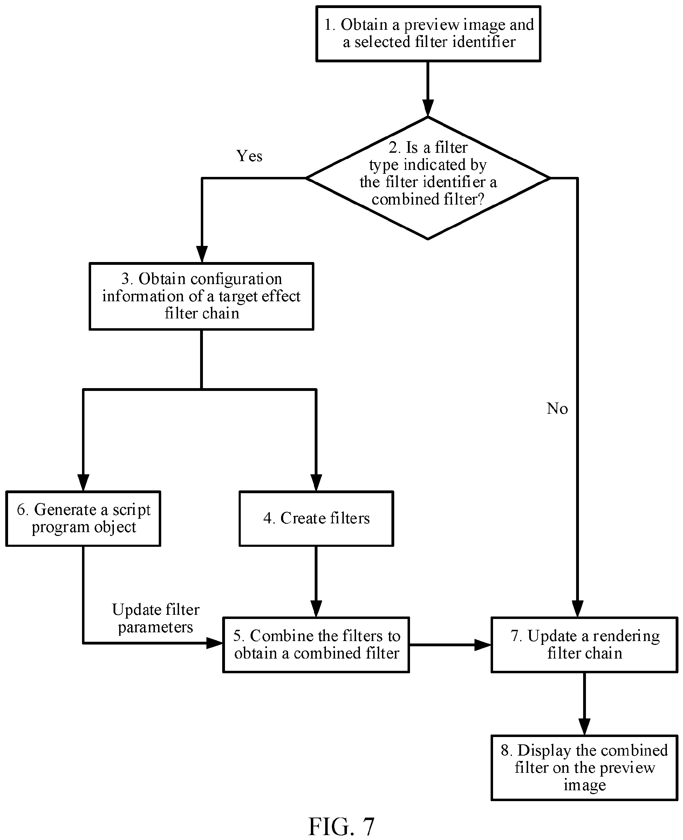

Based on the description of the foregoing operationS601 to step S605, an image processing flowchart provided in the present disclosure may be shown in FIG. 7. Specifically, the following procedure may be included: (1) The image processing device uses a real-time screen in the camera as a preview image, and obtains a selected filter identifier. (2) Determine whether a filter type indicated by the filter identifier can be a combined filter. (3) In a case that the filter type indicated by the filter identifier is a combined filter, download a material package and parse out configuration information of a target effect filter chain corresponding to the filter identifier from the material package. (4) Create filters according to creation information of each filter element in the configuration information of the target effect filter chain. (5) Perform combination according to a combination manner of the filters in the target effect filter chain to obtain a combined filter. (6) Generate a script program object based on a script file in the configuration information of the target effect filter chain, obtain filter effect reference information of the preview image by using the script program object, and update display indication information (the display indication information may also be referred to as a filter parameter) of the filter based on the obtained filter effect reference information. (7) Update the combined filter and the display indication information to a rendering filter chain, perform filter rendering based on the rendering filter chain, and display the combined filter on the preview image. (8) In a case that the filter type indicated by the filter identifier is a single filter, directly update the single filter to a rendering filter chain for rendering, to display the single filter on the preview image.

In all embodiments of the present disclosure, a preview image and a selected filter identifier can be obtained, and configuration information of a target effect filter chain corresponding to the filter identifier can be obtained from a material package in a case that a filter type indicated by the filter identifier is a combined filter. The target effect filter chain includes N filter elements. The N filter elements can be connected in a connection manner of a directed acyclic graph. Each filter element may be a single filter or a special effect filter chain. The configuration information of the target effect filter chain may include combination information of M filter elements. The combination information can be determined based on the connection manner of the directed acyclic graph of the N filter elements. Further, the M filter elements can be combined according to the combination information of the M filter elements to obtain a combined filter, and the combined filter can be displayed on the preview image. It is to be understood that, the material package may be stored in a backend server, filters of a camera application can be all integrated into the material package, and more filter effects can be obtained by using the material package, thereby enriching filters without updating applications. In addition, the combination information of the M filter elements can be determined based on the connection manner of the directed acyclic graph, and various combination information can be generated based on the connection manner of the directed acyclic graph. In all embodiments of the present disclosure, the M filter elements can be combined according to the combination information, so that richer filter effects are obtained without updating applications.

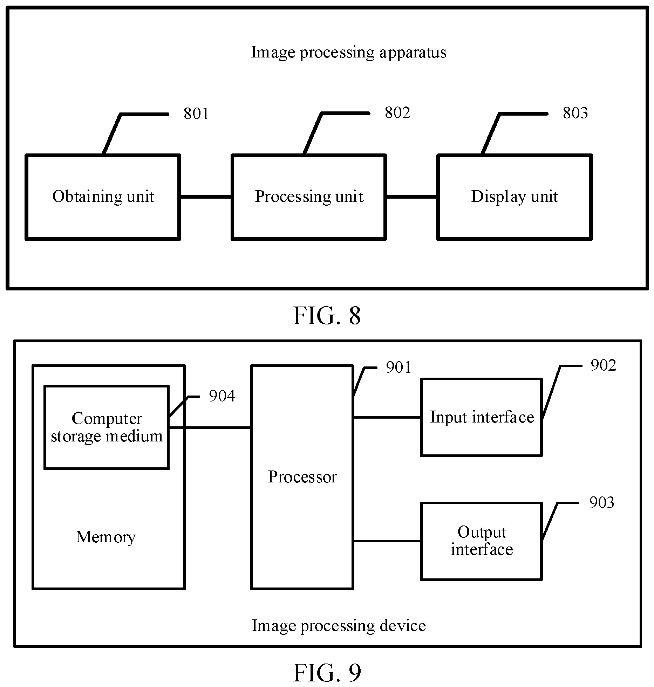

Based on the embodiment of the foregoing image processing method, an embodiment of the present disclosure provides an image processing apparatus. FIG. 8 is a schematic structural diagram of an image processing apparatus according to an embodiment of the present disclosure. The following units may run on the image processing apparatus shown in FIG. 8:
an obtaining unit 801, configured to configured to obtain a input image and a filter identifier for an image filter,
the obtaining unit 801 being further configured to obtain configuration information for a target effect filter chain corresponding to the filter identifier when a filter type indicates a combined filter, the target effect filter chain including N filter elements connected in a connection manner of a directed acyclic graph, and each of the N filter element being a single filter or a sub-filter chain; and the configuration information of the target effect filter chain including combination information of M filter elements, the combination information being determined based on the connection manner of the directed acyclic graph, both N and M being integers greater than or equal to 1, and M being less than or equal to N;
a processing unit 802, configured to combine the M filter elements according to the combination information of the M filter elements to obtain a combined filter; and
a display unit 803, configured to display the combined filter on the input image.

In all embodiments of the present disclosure, the configuration information of the target effect filter chain further includes shader information of each filter element in the N filter elements, and in a case that the N filter elements are all single filters, the processing unit 802 can be further configured to perform initialization based on the shader information corresponding to the each filter element to create the N filter elements.

In all embodiments of the present disclosure, during the obtaining of the configuration information of the target effect filter chain corresponding to the filter identifier, the obtaining unit 801 performs the following operations: obtaining a material package corresponding to the filter identifier in a case that the filter identifier is selected; and obtaining the configuration information of the target effect filter chain from the material package.

In all embodiments of the present disclosure, the material package includes a script file, the script file can be used for recording display indication information of each filter element in the M filter elements, and during the display of the combined filter on the preview image, the display unit 803 performs the following operation: displaying the combined filter on the preview image based on the display indication information of the each filter element.

In all embodiments of the present disclosure, the processing unit 802 can be further configured to generate a script program object according to the script file in the material package; the obtaining unit 801 can be further configured to obtain filter effect reference information corresponding to the preview image by running the script program object, the filter effect reference information including any one or more of the following: information indicating whether a target object exists in the preview image, size information of the preview image, and brightness information of the preview image; and the processing unit 802 can be further configured to update the display indication information of the each filter element based on the filter effect reference information and a preset information update rule.

In all embodiments of the present disclosure, during the display of the combined filter on the preview image, the display unit 803 performs the following operations: adding the combined filter to a rendering filter chain, the rendering filter chain including a basic image effect and the combined filter, and the basic image effect and the combined filter being connected in sequence; preprocessing the preview image through the basic image effect in the rendering filter chain; and rendering and displaying the combined filter in the rendering filter chain on the preprocessed preview image.

In all embodiments of the present disclosure, the material package includes a shader information storage path corresponding to the each filter element, and the obtaining unit 801 can be further configured to obtain the shader information of the each filter element from the material package according to the shader information storage path corresponding to the each filter element.

In all embodiments of the present disclosure, the directed acyclic graph composed of the N filter elements includes a chain structure and a graphical structure.

According to all embodiments of the present disclosure, the steps in the image processing method shown in FIG. 2 may be performed by the units of the image processing apparatus shown in FIG. 8. For example, operations S201 and S202 shown in FIG. 2 may be performed by the obtaining unit 801 in the image processing apparatus shown in FIG. 8, and operation S203 may be performed by the processing unit 802 and the display unit 803 in the image processing apparatus shown in FIG. 8.

According to all embodiments of the present disclosure, the units in the image processing apparatus shown in FIG. 8 may be separately or wholly combined into one or more other units, or one (or some) of the units may further be divided into a plurality of units with smaller functions. In this way, the same operations can be implemented, without affecting the implementation of the technical effects of the embodiments of the present disclosure. The foregoing units are divided based on logical functions. In an actual application, a function of one unit may also be implemented by a plurality of units, or functions of a plurality of units are implemented by one unit. In other embodiments of the present disclosure, on the basis that the image processing apparatus may also include other units, in an actual application, these functions may also be cooperatively implemented by the other units and may be cooperatively implemented by a plurality of units.

According to all embodiments of the present disclosure, the image processing apparatus shown in FIG. 8 may be constructed by and the image processing method in the embodiments of the present disclosure may be implemented by running a computer program (including program code) capable of performing the operations in the corresponding method shown in FIG. 2 on a general-purpose computing device such as a computer including processing elements and memory elements such as a central processing unit (CPU), a random access memory (RAM), and a read-only memory (ROM). The computer program may be recorded in, for example, a computer-readable storage medium, loaded into the image processing device through the computer-readable recording medium, and run therein.

In all embodiments of the present disclosure, a preview image and a selected filter identifier can be obtained, and configuration information of a target effect filter chain corresponding to the filter identifier can be obtained in a case that a filter type indicated by the filter identifier is a combined filter. The target effect filter chain includes N filter elements. The N filter elements can be connected in a connection manner of a directed acyclic graph. Each filter element may be a single filter or a special effect filter chain. The configuration information of the target effect filter chain may include combination information of M filter elements. The combination information can be determined based on the connection manner of the directed acyclic graph of the N filter elements. Further, the M filter elements can be combined according to the combination information of the M filter elements to obtain a combined filter, and the combined filter can be displayed on the preview image. It is to be understood that the combination information of the M filter elements is determined based on the connection manner of the directed acyclic graph, and the connection manner of the directed acyclic graph includes both a chain structure and a graphical structure. In this way, various combination information can be generated based on the connection manner of the directed acyclic graph. In all embodiments of the present disclosure, the M filter elements can be combined according to the combination information, so that richer filter effects are obtained without updating applications.

Based on the embodiment of the image processing method and the embodiment of the image processing apparatus, an embodiment of the present disclosure further provides an image processing device. FIG. 9 is a schematic structural diagram of an image processing device according to an embodiment of the present disclosure. The image processing device shown in FIG. 9 may include a processor 901, an input interface 902, an output interface 903, and a computer storage medium 904. The processor 901, the input interface 902, the output interface 903, and the computer storage medium 904 may be connected through a bus or in another manner.

The computer storage medium 904 may be stored in a memory of the image processing device. The computer storage medium 904 can be configured to store a computer program. The processor 901 can be configured to execute the computer program stored in the computer storage medium 904. The processor 901 (or referred to as a CPU) can be a computing core and a control core of the image processing device, is suitable for implementing one or more computer program, and is specifically suitable for loading and performing the following operations:
obtaining a preview image and a selected filter identifier; obtaining configuration information of a target effect filter chain corresponding to the filter identifier in a case that a filter type indicated by the filter identifier is a combined filter, the target effect filter chain including N filter elements, the N filter elements being connected in a connection manner of a directed acyclic graph, and each filter element being a single filter or a special effect filter chain; and the configuration information of the target effect filter chain including combination information of M filter elements, the combination information being determined based on the connection manner of the directed acyclic graph, both N and M being integers greater than or equal to 1, and M being less than or equal to N; and combining the M filter elements according to the combination information of the M filter elements to obtain a combined filter, and displaying the combined filter on the preview image.

In all embodiments of the present disclosure, a preview image and a selected filter identifier can be obtained, and configuration information of a target effect filter chain corresponding to the filter identifier is obtained in a case that a filter type indicated by the filter identifier is a combined filter. The target effect filter chain includes N filter elements. The N filter elements can be connected in a connection manner of a directed acyclic graph. Each filter element may be a single filter or a special effect filter chain. The configuration information of the target effect filter chain may include combination information of M filter elements. The combination information is determined based on the connection manner of the directed acyclic graph of the N filter elements. Further, the M filter elements can be combined according to the combination information of the M filter elements to obtain a combined filter, and the combined filter is displayed on the preview image. It is to be understood that the combination information of the M filter elements is determined based on the connection manner of the directed acyclic graph, and the connection manner of the directed acyclic graph includes both a chain structure and a graphical structure. In this way, various combination information can be generated based on the connection manner of the directed acyclic graph. In all embodiments of the present disclosure, the M filter elements can be combined according to the combination information, so that richer filter effects are obtained without updating applications.

An embodiment of the present disclosure further provides a computer storage medium (Memory). The computer storage medium is a memory device of the image processing device and is configured to store programs and data. It may be understood that the computer storage medium herein may include an internal storage medium of the image processing device, and certainly may also include an expanded storage medium supported by the image processing device. The computer storage medium provides a storage space. The storage space stores an operating system of the image processing device. In addition, the storage space further stores one or more computer programs suitable for being loaded and executed by the processor 901. The computer storage medium herein may be a high-speed RAM memory, or may be a non-volatile memory, for example, at least one magnetic disk memory; or may be at least one computer storage medium located away from the foregoing processor.

In all embodiments of the present disclosure , the one or more computer programs stored in the computer storage medium may be loaded by the processor 901 to perform the following operations:
obtaining a preview image and a selected filter identifier; obtaining configuration information of a target effect filter chain corresponding to the filter identifier in a case that a filter type indicated by the filter identifier is a combined filter, the target effect filter chain including N filter elements, the N filter elements being connected in a connection manner of a directed acyclic graph, and each filter element being a single filter or a special effect filter chain; and the configuration information of the target effect filter chain including combination information of M filter elements, the combination information being determined based on the connection manner of the directed acyclic graph, both N and M being integers greater than or equal to 1, and M being less than or equal to N; and combining the M filter elements according to the combination information of the M filter elements to obtain a combined filter, and displaying the combined filter on the preview image.

In all embodiments of the present disclosure, the configuration information of the target effect filter chain further includes shader information of each filter element in the N filter elements, and in a case that the N filter elements are all single filters, before the combining the M filter elements according to the combination information of the M filter elements to obtain a combined filter, the processor 901 is further configured to perform the following step: performing initialized creation based on the shader information corresponding to the each filter element to obtain the N filter elements.

In all embodiments of the present disclosure, during the obtaining of the configuration information of the target effect filter chain corresponding to the filter identifier, the processor 901 performs the following operations: obtaining a material package corresponding to the filter identifier in a case that the filter identifier is selected; and obtaining the configuration information of the target effect filter chain from the material package.

In all embodiments of the present disclosure, the material package includes a script file, the script file is used for recording display indication information of each filter element in the M filter elements, and during the display of the combined filter on the preview image, the processor 901 performs the following operation: displaying the combined filter on the preview image based on the display indication information of the each filter element.

In all embodiments of the present disclosure, the processor 901 is further configured to perform the following operation: generating a script program object according to the script file in the material package.

In all embodiments of the present disclosure, before combining the M filter elements according to the combination information of the M filter elements to obtain the combined filter, the processor 901 is further configured to perform the following operations: obtaining filter effect reference information corresponding to the preview image by running the script program object, the filter effect reference information including any one or more of the following: information indicating whether a target object exists in the preview image, size information of the preview image, and brightness information of the preview image; and updating the display indication information of the each filter element based on the filter effect reference information and a preset information update rule.

In all embodiments of the present disclosure, during the display of the combined filter on the preview image, the processor 901 performs the following operations:
adding the combined filter to a rendering filter chain, the rendering filter chain including an image beautification effect and the combined filter, and the image beautification effect and the combined filter being connected in sequence; performing beautification preprocessing on the preview image through the image beautification effect in the rendering filter chain; and rendering and displaying the combined filter in the rendering filter chain on the preview image on which the beautification preprocessing is performed.

In all embodiments of the present disclosure, the material package includes a shader information storage path corresponding to the each filter element, and before performing initialized creation based on the shader information corresponding to the each filter element to obtain the N filter elements, the processor 901 is further configured to perform the following operation: obtaining the shader information corresponding to the each filter element from the material package according to the shader information storage path corresponding to the each filter element.

In all embodiments of the present disclosure, the directed acyclic graph composed of the N filter elements includes a chain structure and a graphical structure.

In all embodiments of the present disclosure, a preview image and a selected filter identifier can be obtained, and configuration information of a target effect filter chain corresponding to the filter identifier is obtained in a case that a filter type indicated by the filter identifier is a combined filter. The target effect filter chain includes N filter elements. The N filter elements can be connected in a connection manner of a directed acyclic graph. Each filter element may be a single filter or a special effect filter chain. The configuration information of the target effect filter chain may include combination information of M filter elements. The combination information is determined based on the connection manner of the directed acyclic graph of the N filter elements. Further, the M filter elements can be combined according to the combination information of the M filter elements to obtain a combined filter, and the combined filter is displayed on the preview image. It is to be understood that the combination information of the M filter elements is determined based on the connection manner of the directed acyclic graph, and the connection manner of the directed acyclic graph includes both a chain structure and a graphical structure. In this way, various combination information can be generated based on the connection manner of the directed acyclic graph. In all embodiments of the present disclosure, the M filter elements can be combined according to the combination information, so that richer filter effects are obtained without updating applications.

## Claims

1. An image processing method, executable by an image processing device, and the method comprising:
obtaining an input image and a filter identifier for an image filter;
obtaining configuration information for a target effect filter chain corresponding to the filter identifier when the filter identifier indicates a combined filter, the target effect filter chain comprising N filter elements connected in a connection manner of a directed acyclic graph, and each of the N filter elements being a single filter or a sub-filter chain; and the configuration information of the target effect filter chain comprising combination information of M filter elements, the combination information being determined based on the connection manner of the directed acyclic graph, wherein both N and M are integers greater than or equal to 1, and M is less than or equal to N; and
obtainingthe combined filter by combining the M filter elements according to the combination information of the M filter elements and displaying the combined filter on the input image.

2. The method according to claim 1, wherein the configuration information of the target effect filter chain further comprises shader information of each filter element in the N filter elements, and based on the N filter elements being all single filters, prior obtaining the combined filter according to the combining the M filter elements according to the combination information of the M filter elements to obtain a combined filter, the method further comprises:
generating the N filter elements by initializing each filter element in the N filter elements based on the shader information corresponding to each filter element in the N filter elements.

3. The method according to claim 2, wherein obtaining the configuration information for the target effect filter chain corresponding to the filter identifier comprises:
obtaining a material package corresponding to the filter identifier based on the filter identifier being selected; and
obtaining the configuration information of the target effect filter chain from the material package.

4. The method according to claim 3, wherein the material package comprises a script file, wherein the script file comprises display indication information of each filter element in the M filter elements, and wherein displaying the combined filter on the input image comprises:
displaying the combined filter on the input image based on the display indication information of the each filter element.

5. The method according to claim 4, wherein the method further comprises:
generating a script program object based on the script file in the material package; and
before the combining the M filter elements according to the combination information of the M filter elements to obtain a combined filter, the method further comprises:
obtaining a filter effect reference information corresponding to the input image by running the script program object, wherein the filter effect reference information comprises one or more of the following: information indicating whether a target object exists in the input image, size of the input image, and brightness of the input image; and
updating the display indication information of the each filter element in the M filter elements based on the filter effect reference information and a preset information update rule.

6. The method according to claim 3, wherein the material package comprises a storage path of the shader information corresponding to the each filter element in the N filter elements, and before the generating the N filter elements by initializing each filter element in the N filter elements based on the shader information corresponding to the each filter element in the N filter elements, the method further comprises:
obtaining the shader information of the each filter element in the N filter elements from the material package according to the storage path of the shader information corresponding to the each filter element.

7. The method according to claim 1, wherein the displaying the combined filter on the input image comprises:
adding (S604) the combined filter to a rendering filter chain, the rendering filter chain comprising a basic image effect and the combined filter, and the basic image effect and the combined filter being connected in sequence;
preprocessing the input image based on the basic image effect in the rendering filter chain; and
rendering and displaying the combined filter in the rendering filter chain on the preprocessed input image.

8. The method according to claim 1, wherein the directed acyclic graph composed of the N filter elements comprises a chain structure and a graphical structure.

9. The method according to claim 1, wherein obtaining the configuration information for the target effect filter chain corresponding to the filter identifier when the filter type indicates the combined filter comprises:
obtaining a correspondence between a filter, a filter identifier, and a filter type, the filter type comprising either a single filter or a combined filter, wherein based on the filter type corresponding to the filter identifier being a single filter, the filter corresponding to the filter identifier is a single filter; and wherein the filter type corresponding to the filter identifier being a combined filter, a filter corresponding to the filter identifier is a sub-filter chain;
searching for the filter type corresponding to the filter identifier obtained based on the correspondence between the filter, the filter identifier, and the filter type;
obtaining the target effect filter chain corresponding to the filter identifier obtained based on the correspondence between the filter, the filter identifier, and the filter type when the filter type corresponding to the selected filter identifier is a combined filter; and
obtaining the configuration information of the target effect filter chain.

10. An image processing apparatus, comprising:
an obtaining unit, configured to obtain a input image and a filter identifier for an image filter,
the obtaining unit being further configured to obtain configuration information for a target effect filter chain corresponding to the filter identifier when the filter identifier indicates a combined filter, the target effect filter chain comprising N filter elements connected in a connection manner of a directed acyclic graph, and each of the N filter elements being a single filter or a sub-filter chain; and the configuration information of the target effect filter chain comprising combination information of M filter elements, the combination information being determined based on the connection manner of the directed acyclic graph, wherein both N and M are integers greater than or equal to 1, and M is less than or equal to N;
a processing unit, configured to obtain the combined filter by combining the M filter elements based on the combination information of the M filter elements to obtain a combined filter; and
a display unit, configured to display the combined filter on the input image.

11. The apparatus according to claim 10, wherein the configuration information of the target effect filter chain further comprises shader information of each filter element in the N filter elements, and based on the N filter elements being all single filters, the processing unit (802) is further configured to generate the N filter elements by initializing each filter element in the N filter elements based on the shader information corresponding to each filter element in the N filter elements.

12. The apparatus according to claim 11, wherein the obtaining unit is further configured to: obtain a material package corresponding to the filter identifier based on the filter identifier being selected; and obtain the configuration information of the target effect filter chain from the material package.

13. The apparatus according to claim 12, wherein the material package comprises a script file, the script file comprises recording display indication information of each filter element in the M filter elements, and the display unit is configured to display the combined filter on the input image based on the display indication information of the each filter element.

14. The apparatus according to claim 13, wherein the processing unit is further configured to generate a script program object according to the script file in the material package;
the obtaining unit is further configured to obtain a filter effect reference information corresponding to the inputimage by running the script program object, wherein the filter effect reference information comprises one or more of: information indicating whether a target object exists in the input image, size of the input image, and brightness of the preview input image; and
the processing unit is further configured to update the display indication information of the each filter element in the M filter elements based on the filter effect reference information and a preset information update rule.

15. An image processing device, comprising:
a processor, suitable for implementing one or more computer programs; and
a computer storage medium, storing one or more computer programs, the one or more computer programs being suitable for loading by the processor and performing the image processing method according to any one of claims 1 to 9.

16. A computer storage medium, storing a computer program, the computer program, when executed by a processor, being used for loading and performing the image processing method according to any one of claims 1 to 9.

17. A computer program product or a computer program, the computer program product comprising a computer program, and the computer program, when executed by a processor, being used for loading and performing the image processing method according to any one of claims 1 to 9.
